# DEMANDE DE BREVET EUROPEEN

(11) **EP 1 521 112 A1**
(43) Date de publication de la demande: **06.04.2005**
(21) Numéro de dépôt: 04011612.1
(22) Date de dépôt: 26.05.2004
(51) Int. Cl.: G02C 11/02

(54) **Monture de lunettes et élément de décor associable**

(30) Priorité: 01.10.2003 FR 0311572
(71) Demandeur: Tand'm S.a.r.l., 39800 Poligny (FR)
(72) Inventeur: Charmoille, Patricia, Cabinet Ballot,, 25000 Besancon (FR)
(74) Mandataire: Bentz, Jean-Paul

(57) **Abrégé**

Lunettes constituées par deux verres (2) soutenus par une monture (3) comprenant deux branches latérales (4) reliées par l'intermédiaire de charnières à une face (5) sur laquelle est susceptible d'être rapporté, d'un manière amovible, au moins un élément de décor (6) pour la transformation de l'aspect de ladite monture (3), choisi par l'utilisateur dans une gamme prédéterminée de formes, et mis en place sur ladite monture (3) par l'intermédiaire de moyens de fixation, caractérisées en ce que ces moyens sont constitués par une gorge (7) réalisée sur tout ou partie du pourtour de la monture (3) ou tout élément solidaire de celle-ci et destinée à recevoir par encliquetage l'élément de décor (6) ou tout élément support solidaire de celui-ci par l'intermédiaire de deux bras latéraux (8), élastiquement déformables et faisant corps avec l'élément de décor (6) proprement dit ou avec son élément support.

## Description

La présente invention concerne une paire de lunettes constituée par deux verres soutenus par une monture comprenant deux branches latérales reliées par l'intermédiaire de charnières à une face de la monture sur laquelle est susceptible d'être rapporté d'une manière amovible au moins un élément de décor, de manière à obtenir la transformation de ladite monture.

Cet élément de décor pourra être de différentes formes, choisi par l'utilisateur dans une gamme prédéterminée et mis en place sur la monture par l'intermédiaire de moyens de fixation.

Diverses solutions ont déjà été proposées pour obtenir ce genre de transformation. C'est ainsi qu'il est connu de disposer d'au moins une face complète, de couleur différente de la monture, à rapporter sur celle-ci, afin de changer son aspect.

Néanmoins, un inconvénient réside dans le fait qu'il est nécessaire d'avoir une forme identique à la monture d'origine, car cette dernière se loge en fait dans les gorges internes de la monture optionnelle.

Dans de telles conditions, on comprend bien que seule la couleur peut être changée, la forme ne pouvant l'être en aucun cas.

Dès lors, les transformations d'aspect sont limitées.

C'est pour cela qu'il a également été proposé des montures auxiliaires dont la fixation sur une monture principale est effectuée par des aimants.

Dans ce dernier cas, les parties métalliques sont montées sur l'une des montures en coïncidence avec des éléments magnétiques montés sur l'autre monture.

Un tel système de fixation présente l'inconvénient de ne pas retenir la monture auxiliaire, ni dans un sens transversal, ni dans un sens longitudinal, ce qui provoque son déplacement dans l'un ou l'autre de ces deux sens par rapport à la monture, ce qui peut s'avérer fastidieux et inesthétique.

Pour éviter cet inconvénient, d'autres systèmes ont également déjà été proposés et qui consistent en des clips réalisés par exemple sur l'élément de transformation, aptes à s'encliqueter dans une partie complémentaire et correspondante réalisés sur la monture même.

Si cela donne de bons résultats, il reste néanmoins nécessaire de réaliser ces clips et ces logements, ce qui entraîne un surcoût de l'ensemble.

La présente invention a pour but de remédier à l'ensemble des inconvénients précités et concerne à cet effet des lunettes constituées par deux verres soutenus par une monture comprenant deux branches latérales reliées par l'intermédiaire de charnières à une face sur laquelle est susceptible d'être rapporté, d'un manière amovible, au moins un élément de décor pour la transformation de l'aspect de ladite monture, choisi par l'utilisateur dans une gamme prédéterminée de formes, et mis en place sur ladite monture par l'intermédiaire de moyens de fixation, caractérisées en ce que ces moyens sont constitués par une gorge réalisée sur tout ou partie du pourtour de la monture ou tout élément solidaire de celle-ci et destinée à recevoir par encliquetage l'élément de décor ou tout élément support solidaire de celui-ci par l'intermédiaire de deux bras latéraux, élastiquement déformables et faisant corps avec l'élément de décor proprement dit ou avec son élément support, chacun desdits bras formant au moins au delà de l'axe médian longitudinal de la monture des courbures dirigées l'une vers l'autre, de manière à assurer la retenue dudit élément de décor ou de son élément support sur la monture, par auto-clipage, tout en demeurant amovible.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :
La figure 1 représente en plan, un élément de décor selon une première réalisation.
La figure 2 représente également vu en plan, une monture de base susceptible de recevoir différents élément de décor du type de celui de la figure 1, par exemple.
La figure 3 est une vue en plan d'une monture selon la figure 2 sur laquelle a été rapporté l'élément de décor selon la figure 1.
La figure 4 est une vue en coupe d'une monture équipée d'un élément de décor selon la figure 3, effectuée dans le plan longitudinal dudit élément de décor.
La figure 5 est une vue en coupe, à échelle agrandie selon la ligne V, V de la figure 4.
La figure 5A représente une variante de réalisation, comparative à la figure 5.
Les figures 6 et 7 représentent respectivement en plan, un élément de décor selon une variante de réalisation et ce même élément de décor rapporté sur une monture de référence telle que représentée sur la figure 2.
Les figures 8 et 9 représentent respectivement en plan, un élément de décor selon une variante de réalisation et ce même élément de décor rapporté sur une monture de référence telle que représentée sur la figure 2.
Les figures 10 et 11 représentent respectivement en plan, un élément de décor selon une variante de réalisation et ce même élément de décor rapporté sur une monture de référence telle que représentée sur la figure 2.

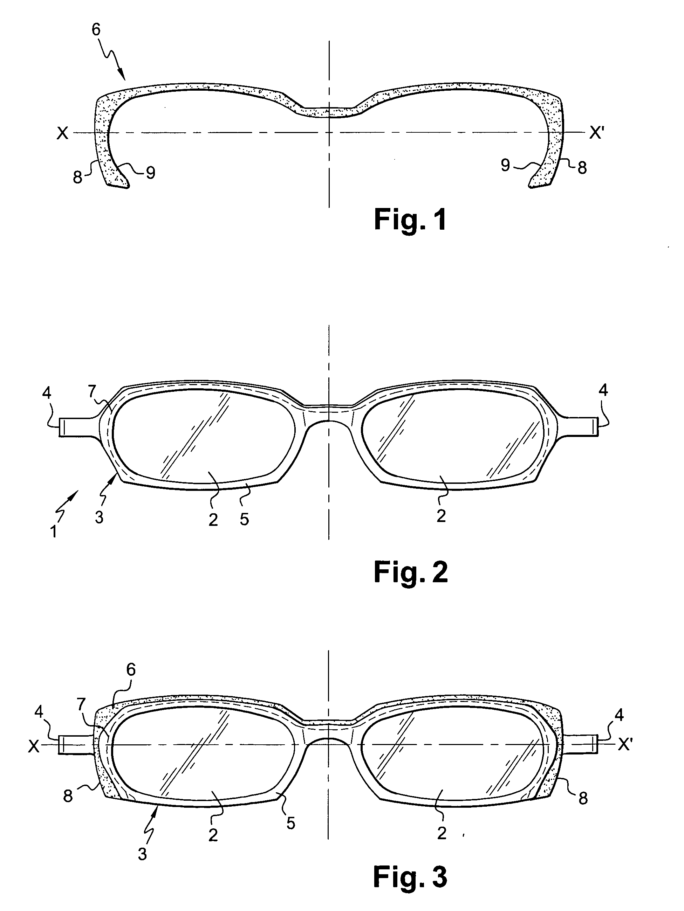

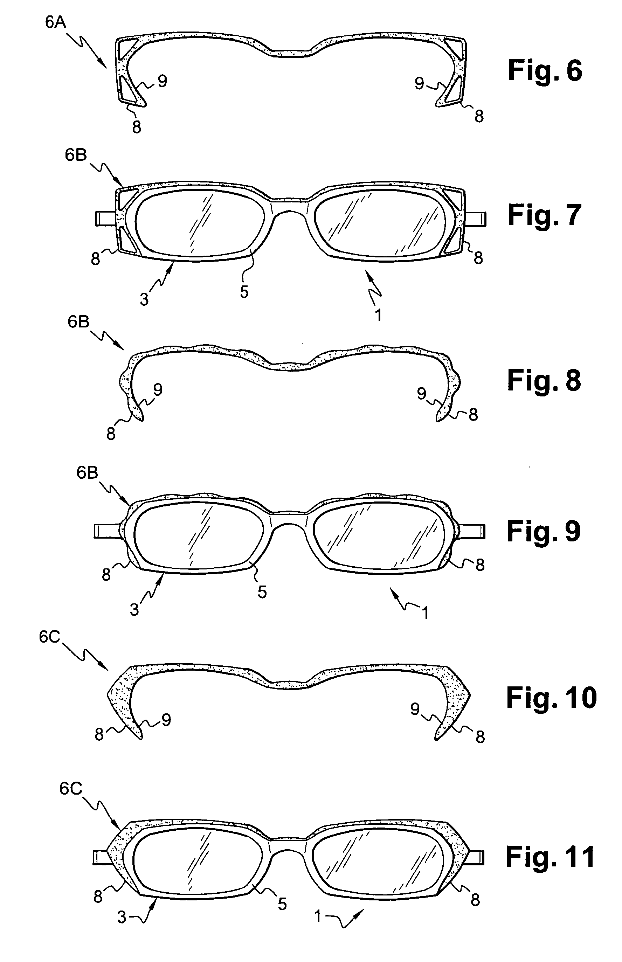

La paire de lunettes 1 désignée globalement et représentée sur les figures 2, 3, 4, 7, 9 et 11 est constituée par deux verres 2 soutenus par une monture 3 comprenant deux branches latérales 4 reliées par l'intermédiaire de charnières à une face 5 sur laquelle est susceptible d'être rapporté de manière amovible un élément de décor 6, 6A, 6B, 6C pour la transformation de l'aspect de ladite monture 3.

Il est important de souligner que la monture 3 est la même quel que soit l'élément de décor 6, 6A, 6B, 6C choisi, comme le montre bien les différents exemples de réalisation représentés.

En fait, l'utilisateur avec une même paire de lunettes de référence pourra donc adapter l'élément de décor 6, 6A, 6B, 6C de son choix.

Les moyens de fixation dudit élément de décor 6, 6A, 6B, 6C sur la monture standard 3 sont constitués, par une gorge 7 réalisée sur tout ou partie du pourtour de la monture 3 ou tout élément solidaire de celle-ci et destinée à recevoir par encliquetage l'élément de décor 6, 6A, 6B, 6C ou tout élément support 10 solidaire de celui-ci par l'intermédiaire de deux bras latéraux 8, élastiquement déformables et faisant corps avec l'élément de décor proprement dit ou avec son élément support 10, chacun desdits bras 8 formant au moins au delà de l'axe médian longitudinal X, X' de la monture 3 des courbures 9 dirigées l'une vers l'autre, de manière à assurer la retenue dudit élément de décor 6, 6A, 6B, 6C ou de son élément support 10 sur la monture 3, par auto-clipage, tout en demeurant amovible.

L'intérêt majeur de ces moyens de fixation réside dans le fait qu'ils ne nécessitent aucun outil particulier et que l'élément de décor 6, 6A, 6B, 6C, qu'il soit placé sur un élément support ou non, peut être mis en place et retiré par un utilisateur non professionnel.

De plus, ces moyens sont obtenus au cours d'une même opération de moulage, ou de découpe, qu'il s'agisse d'une matière plastique ou d'un métal, en ce qui concerne l'élément de décor 6, 6A, 6B, 6C, ou de son élément support 10.

En ce qui concerne la réalisation du moyen complémentaire de fixation constituée par la gorge 7, celle-ci est également obtenue au cours d'une même opération de moulage ou d'usinage avec la monture 3 si celle-ci est réalisée en matière plastique. La gorge 7 pourra également être réalisée sur tout élément solidaire de la monture 3.

Ainsi, non seulement il est particulièrement aisé de changer d'élément de décor, avec ou sans élément support, mais de plus, le résultat est obtenu pour un coût moindre.

Selon les exemples représentés, la gorge 7 est réalisée au moins sur les parties supérieures et latérales de la monture 3 et correspond au profil interne de l'élément de décor 6, 6A, 6B, 6C auto-clipable, ou de son élément support 10.

Néanmoins pour permettre à une même monture 3 de recevoir un élément de décor 6, 6A, 6B, 6C, ou son élément support 10, auto-clipable indifféremment sur sa partie supérieure ou sur sa partie inférieure, la gorge 7 sera réalisée sur tout le contour de la monture 3, offrant ainsi toutes les possibilités.

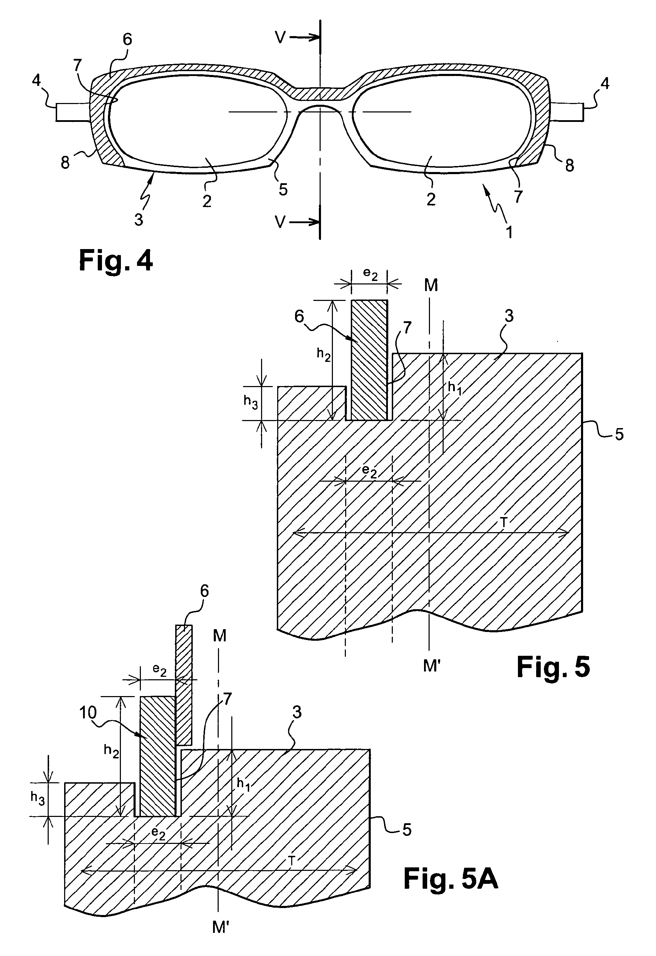

Comme le montre bien la figure 5, la gorge 7 est réalisée sur la monture 3 selon une profondeur h1 inférieure à la hauteur h2 de l'élément de décor 6, 6A, 6B, 6C, ou de son élément support 10, de manière d'une part à le rendre visible et d'autre part à faciliter son retrait dans la gorge 7.

Pour faciliter également cette insertion de l'élément de décor 6, 6A, 6B, 6C, ou de son élément support, dans la gorge 7 de la monture 3 et comme le montre également la figure 5, la gorge 7 présente une profondeur H3 inférieure à la profondeur H1 du côté de la monture par lequel sera introduit l'élément de décor 6, 6A, 6B, 6C.

La gorge 7 est réalisée sur la monture 3 dans un plan sensiblement parallèle à la face 5 de celle-ci, son positionnement dans le sens transversal T, par rapport à un plan médian M, M' se confondent avec celui-ci, ou est situé en avant, ou en arrière, selon l'esthétique recherchée en fonction de l'élément de décor 6, 6A, 6B, 6C par rapport à la monture 3.

La figure 5A se différencie essentiellement de la figure 5, en ce que selon une variante de réalisation, l'élément de décor 6 est rapporté par tout moyen sur un élément support 10, lui-même étant logé dans la gorge 7 de la monture 3, en lieu et place de l'élément de décor 6, selon la figure 5.

L'élément de décor 6, 6A, 6B, 6C ou son élément support 10 est constitué par tout matériau élastiquement déformable, tel que matière plastique, métal, bois.

Egalement, la monture 3 est réalisée en tout matériau usinable ou moulable pour permettre la réalisation de la gorge 7, tel que matière plastique, métal, bois.

Comme le montre bien les différentes variantes de réalisation représentées, les élément de décor 6, 6A, 6B, 6C peuvent être de différentes formes, choisies par l'utilisateur dans une gamme prédéterminée et mis en place sur ladite monture 3 par l'intermédiaire des moyens de fixation qui viennent d'être décrit ci-dessus.

## Revendications

1. Lunettes constituées par deux verres (2) soutenus par une monture (3) comprenant deux branches latérales (4) reliées par l'intermédiaire de charnières à une face (5) sur laquelle est susceptible d'être rapporté, d'un manière amovible, au moins un élément de décor (6, 6A, 6B, 6C) pour la transformation de l'aspect de ladite monture (3), choisi par l'utilisateur dans une gamme prédéterminée de formes, et mis en place sur ladite monture (3) par l'intermédiaire de moyens de fixation, **caractérisées en ce que** ces moyens sont constitués par une gorge (7) réalisée sur tout ou partie du pourtour de la monture (3) ou tout élément solidaire de celle-ci et destinée à recevoir par encliquetage l'élément de décor (6, 6A, 6B, 6C) ou tout élément support (10) solidaire de celui-ci par l'intermédiaire de deux bras latéraux (8), élastiquement déformables et faisant corps avec l'élément de décor proprement dit ou avec son élément support (10), chacun desdits bras (8) formant au moins au delà de l'axe médian longitudinal (X, X') de la monture (3) des courbures (9) dirigées l'une vers l'autre, de manière à assurer la retenue dudit élément de décor (6, 6A, 6B, 6C) ou de son élément support (10) sur la monture (3), par auto-clipage, tout en demeurant amovible.

2. Lunettes selon la revendication 1, **caractérisées en ce que** la gorge (7) est réalisée au moins sur les parties supérieures et latérales de la monture (3) et correspond au profil interne de l'élément de décor (6, 6A, 6B, 6C), ou de son élément support (10), auto-clipable.

3. Lunettes selon la revendication 1, **caractérisées en ce que** la gorge (7) est réalisée sur tout le pourtour de la monture (3) de manière à recevoir l'élément de décor (6, 6A, 6B, 6C), ou son élément support, auto-clipable, indifféremment sur sa partie supérieure ou sur sa partie inférieure.

4. Lunettes selon l'une des revendications 1 à 3, **caractérisées en ce que** la gorge (7) est réalisée sur la monture (3) selon une profondeur (h1) inférieure à la hauteur (h2) de l'élément de décor (6, 6A, 6B, 6C), ou de son élément support, de manière d'une part à le rendre visible et d'autre part à faciliter son insertion dans la gorge (7).

5. Lunettes selon la revendication 4, **caractérisées en ce que** la gorge (7) est réalisée sur la monture (3) dans un plan sensiblement parallèle à la face (5) de celle-ci, son positionnement dans le sens transversal (T), par rapport à un plan médian (M, M') se confondent avec celui-ci, ou est situé en avant, ou en arrière, selon l'esthétique recherchée en fonction de l'élément de décor (6, 6A, 6B, 6C) par rapport à la monture (3).

6. Lunettes selon l'une des revendications précédentes, **caractérisées en ce que** l'élément de décor (6, 6A, 6B, 6C), ou son élément support (10), est constitué par tout matériau élastiquement déformable, tel que matière plastique, métal, bois.

7. Lunettes selon l'une des revendications précédentes, **caractérisées en ce que** la monture (3) est réalisée en tout matériau usinable ou moulable pour permettre la réalisation de la gorge (7), tel que matière plastique, métal, bois.
